(19) Europäisches Patentamt
European Patent Office
Office européen des brevets

(11) **EP 3 748 274 B1**

(12) **FASCICULE DE BREVET EUROPEEN**

(45) Date de publication et mention de la délivrance du brevet:
**31.07.2024 Bulletin 2024/31**

(21) Numéro de dépôt: **20178575.5**

(22) Date de dépôt: **05.06.2020**

(51) Classification Internationale des Brevets (IPC):
*F28D 20/00* (2006.01)    *F01K 13/00* (2006.01)
*F01K 13/02* (2006.01)    *F01K 25/06* (2006.01)
*F25B 1/00* (2006.01)    *F25B 15/00* (2006.01)
*F25B 25/02* (2006.01)    *F25B 41/00* (2021.01)

(52) Classification Coopérative des Brevets (CPC):
**F01K 13/00; F01K 13/02; F01K 25/065; F25B 1/00; F25B 15/00; F25B 25/02;** F25B 2313/0271; F25B 2400/0401; F25B 2400/075; F25B 2400/141; F25B 2400/24; Y02A 30/27; Y02B 30/62; Y02E 20/14

(54) **SYSTÈME DE CO-PRODUCTION D'ÉNERGIE ÉLECTRIQUE ET D'ÉNERGIE THERMIQUE FROIDE ET CHAUDE ET PROCÉDÉ ASSOCIÉ**

SYSTEM ZUR GLEICHZEITIGEN ERZEUGUNG VON ELEKTRISCHER ENERGIE UND KALTER UND HEISSER WÄRMEENERGIE, UND ENTSPRECHENDES VERFAHREN

SYSTEM FOR CO-PRODUCING ELECTRICAL ENERGY AND HOT AND COLD THERMAL ENERGY AND ASSOCIATED METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.06.2019 FR 1905985**

(43) Date de publication de la demande:
**09.12.2020 Bulletin 2020/50**

(73) Titulaire: **COMMISSARIAT A L'ENERGIE ATOMIQUE ET AUX ENERGIES ALTERNATIVES**
**75015 Paris (FR)**

(72) Inventeurs:
• **TAUVERON, Nicolas**
  **38054 GRENOBLE (FR)**
• **PHAN, Hai Trieu**
  **38054 GRENOBLE Cedex 09 (FR)**
• **VOELTZEL, Nicolas**
  **38054 GRENOBLE (FR)**

(74) Mandataire: **Hautier IP et al**
**20, rue de la Liberté**
**06000 Nice (FR)**

(56) Documents cités:
WO-A1-2016/004414    AT-A4- 511 823
DE-A1- 102006 060 836    JP-A- 2002 333 293
US-A- 5 918 805    US-A1- 2005 086 971

**Description**

## DOMAINE TECHNIQUE

L'invention concerne le domaine des systèmes thermodynamiques pour la coproduction d'énergie électrique et d'énergie thermique. Elle trouve pour application particulièrement avantageuse le domaine des systèmes stationnaires à partir de source chaleur à basse température telle que des rejets thermiques de procédés industriels, le solaire thermique, la biomasse, la géothermie, des turbines à gaz. L'invention peut également trouver des applications dans le domaine des véhicules que ce soient des véhicules à moteur thermique ou bien à moteur hybride ayant un besoin d'énergie thermique et d'électricité.

## ETAT DE LA TECHNIQUE

On connait de la publication Gokmen Demirkaya, Ricardo Vasquez Padilla, Armando Fontalvo, Yee Yan Lim. Thermal and Exergetic Analysis of the Goswami Cycle Integrated with Mid-Grade Heat Sources. August 2017Entropy 19(8):416. DOI: 10.3390/e19080416, un cycle de coproduction d'électricité et de froid avec échangeur interne. Le cycle combine un cycle de Rankine et un cycle de production de froid par absorption. Les différents organes des deux cycles sont agencés en série sur un circuit fluidique fermé.

Le dispositif décrit dans cette publication ne permet pas de faire varier les conditions de production d'électricité et de froid. La production de froid et la production d'électricité sont toujours simultanées.

Or, les politiques énergétiques actuelles posent le problème de la gestion de la fluctuation ou de l'intermittence des sources, mais aussi de la maitrise de la variabilité des pics de demande énergétique et cela tout en valorisant des sources de chaleur de bas niveau thermique tel que le solaire thermique, les chaleurs fatales. Il est donc demandé aux installations de production d'énergie de répondre à ces problématiques, en particulier le dispositif de l'état de la technique manque clairement de flexibilité de production de ces deux types d'énergie.

Il existe des systèmes combinant une pompe à chaleur à absorption et une pompe à chaleur électrique comme décrit dans la publication de Wu et al. 2018, A novel internally hybrid absorption-compression heat pump for performance improvement, Energy Conversion and Management, Volume 168, 15 July 2018, Pages 237-251. Ces systèmes permettent d'augmenter la production d'énergie thermique par la pompe à chaleur en combinaison avec une autre source de production. Cette publication décrit une pompe à chaleur à absorption assistée d'un compresseur ou bien une pompe à chaleur à compression assistée par un cycle à absorption. Dans ces deux cas, les systèmes ne concernent que la production d'énergie thermique, sans possibilité de produire de l'électricité.

On connait du document AT511823A4 un procédé et un dispositif pour générer du froid et/ou de la chaleur utile au moyen d'un cycle d'absorption utilisant une source de chaleur supérieure à la température ambiante et pour une génération supplémentaire d'énergie mécanique ou électrique, grâce à une machine à expansion agencée sur le circuit fluidique entre le générateur et le condenseur. Ce dispositif ne permet pas d'optimiser la production d'énergie thermique notamment il présente une faible flexibilité pour la production d'énergie thermique.

On connait du document US 2005/086971 un dispositif destiné à permettre avec un seul système le chauffage ou le refroidissement de l'air ambiant et la production d'électricité grâce à un cycle d'absorption et d'un expanseur permettant de produire simultanément du froid et de l'électricité. Ce dispositif ne permet pas d'optimiser la production d'énergie thermique notamment il présente une faible flexibilité pour la production d'électricité.

Le document DE 102006060836 décrit une roue de ventilateur pour un compresseur d'un turbocompresseur à gaz d'échappement ou bien d'une turbine dans les surpresseurs d'air secondaire.

Un objet de la présente invention est donc de proposer un système de coproduction d'énergie électrique et d'énergie thermique qui soit flexible en fonction des besoins d'électricité et d'énergie thermique, froid et chaud, et de la disponibilité et du coût des sources d'énergie.

Les autres objets, caractéristiques et avantages de la présente invention apparaîtront à l'examen de la description suivante et des dessins d'accompagnement. Il est entendu que d'autres avantages peuvent être incorporés.

## RESUME

Pour atteindre cet objectif, la présente invention prévoit un système de production d'énergie thermique et d'énergie électrique comme défini par la revendication indépendante 1.

La présente invention permet d'assurer une flexibilité de la production de froid, de chaleur et d'électricité en fonction des besoins et des sources. L'utilisation d'un compresseur réversible en combinaison avec le module de gestion de la circulation du fluide frigorigène rend le système compact, limitant le nombre de composants et permettant un coût réduit et une intégration possible dans des applications non stationnaires.

L'utilisation d'un compresseur réversible de type turbomachine dans un cycle à absorption est une démarche non commune pour l'homme du métier pour qui se poseraient des problématiques liées au fluide réfrigérant dans le compresseur en mode expanseur. Le compresseur est ainsi adapté à fonctionner alternativement en expanseur relié à une génératrice pour la production d'électricité et en compresseur actionné par un moteur pour comprimer un fluide.

Le compresseur réversible est agencé entre le générateur et l'absorbeur en dérivation du condenseur et de l'évaporateur, c'est-à-dire que le circuit fluidique comprend une ligne de dérivation agencée entre le générateur et l'absorbeur et en parallèle du condenseur et de l'évaporateur et sur laquelle est agencé le compresseur réversible. Cette disposition en dérivation du compresseur réversible permet par l'intermédiaire du module de gestion de la circulation de la solution de travail dans le circuit fluidique de produire de l'électricité et de l'énergie thermique dans de nombreuses combinaisons possibles allant de 100% d'électricité ou 100% d'énergie thermique à une proportion plus ou moins importante d'électricité et d'énergie thermique, en particulier du froid. L'utilisation d'un compresseur réversible de type turbomachine permet avantageusement une production électrique de moyenne et grande puissance, avantageusement supérieure à 100KWe (KiloWatt électrique).

Un autre aspect de la présente invention concerne un procédé de production d'énergie électrique et d'énergie thermique par un système tel que décrit précédemment, où ce procédé est défini par la revendication indépendante 7.

Avantageusement, l'énergie thermique produite dans le premier mode de fonctionnement est du froid, qui se fait par la circulation de la solution de travail dans le circuit fluidique successivement au travers du générateur, du condenseur, de l'évaporateur, de l'absorbeur puis à nouveau dans le générateur.

Avantageusement, l'énergie thermique produite est de la chaleur, par la circulation de la solution de travail dans le circuit fluidique successivement au travers de l'absorbeur fonctionnant en mode générateur, du compresseur réversible en mode compresseur et du générateur fonctionnant en mode absorbeur, puis à nouveau dans l'absorbeur.

Selon un aspect, l'invention concerne l'utilisation d'un système de production d'énergie thermique et d'énergie électrique tel que décrit ci-dessus pour une production électrique d'une puissance supérieure à 100 kWe.

## BREVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :

La figure 1 représente un schéma général du système selon l'invention.
La figure 2 représente un schéma du système fonctionnant suivant le premier mode de fonctionnement permettant la production d'énergie thermique en particulier du froid.
La figure 3 représente un schéma du système fonctionnant suivant le premier mode de fonctionnement permettant la production d'énergie électrique.
La figure 4 représente un schéma du système fonctionnant suivant le deuxième mode de fonctionnement permettant la production d'énergie électrique simultanément à la production d'énergie thermique en particulier du froid.
La figure 5 représente un schéma du système fonctionnant suivant le troisième mode de fonctionnement permettant la production d'énergie thermique en particulier de la chaleur.
La figure 6 représente un graphe de la production de puissance mécanique/électrique par le compresseur réversible en mode expanseur (fonctions B et C) et de froid à l'évaporateur (fonctions A et C) en fonction de la part de production de froid.
La figure 7 représente un graphe du rendement du compresseur réversible en mode expanseur (fonctions B et C) et Coefficient de Performance (COP) de la production de froid (fonctions A et C) en fonction de la part de production de froid.
La figure 8 représente un graphe de la production de chaud (fonction E) en fonction de la puissance électrique appelée au compresseur.
La figure 9 représente un graphe du COP de la production de chaud en fonction de la puissance électrique appelée au compresseur.

Les dessins sont donnés à titre d'exemple et ne sont pas limitatifs de l'invention. Ils constituent des représentations schématiques de principe destinées à faciliter la compréhension de l'invention et ne sont pas nécessairement à l'échelle des applications pratiques.

## DESCRIPTION DETAILLEE

Avant d'entamer une revue détaillée de modes de réalisation de l'invention, sont énoncées ci-après des caractéristiques optionnelles qui peuvent éventuellement être utilisées en association ou alternativement.

Avantageusement, la solution de travail comprend comme fluide réfrigérant de l'ammoniac ($NH_3$) et comme

absorbant de l'eau ($H_2O$). De préférence, la solution de travail n'est pas un fluide organique.

Avantageusement, le compresseur réversible est un compresseur centrifuge - turbine centripète ou compresseur axial - turbine axiale

Avantageusement, le système comprend au moins un module de stockage de frigories associé à l'évaporateur. Préférentiellement, le module de stockage de frigories est associé à l'absorbeur pour déstocker les frigories.

Avantageusement, le système comprend au moins un module de stockage de calories associé à l'absorbeur. Préférentiellement, le module de stockage de calories est associé au générateur pour déstocker les calories.

Avantageusement, le système comprend au moins un module de stockage d'électricité associé au compresseur, plus spécifiquement à la génératrice.

Avantageusement, dans le procédé selon le premier mode de fonctionnement, l'énergie thermique produite est de la chaleur, par la circulation de la solution de travail dans le circuit fluidique successivement au travers de l'absorbeur fonctionnant en mode générateur, du compresseur réversible en mode compresseur et du générateur fonctionnant en mode absorbeur puis à nouveau dans l'absorbeur.

Avantageusement, le système comprend une source de chaleur comprenant de la chaleur basse température avantageusement comprise entre 70°C et 150°C. Par exemple de la chaleur fatale.

Avantageusement, le procédé la température de l'énergie thermique froide est compris entre -10°C et -25°C ou -10°C et 20°C.

L'usage de l'article indéfini « un » ou « une » pour un élément ou une étape n'exclut pas, sauf mention contraire, la présence d'une pluralité de tels éléments ou étapes.

Il est précisé que dans le cadre de la présente invention, le terme « agencé sur », ou ses équivalents signifient « en connexion fluidique ».

Dans la présente description, l'expression « A fluidiquement raccordé à B » est synonyme de « A est en connexion fluidique avec B » ne signifie pas nécessairement qu'il n'existe pas d'organe entre A et B. Les expressions « agencée sur » ou « sur » sont synonymes de « raccordé fluidiquement à ».

L'amont et l'aval en un point donné sont pris en référence au sens de circulation du fluide dans le circuit.

On entend par échange direct ou couplage direct que l'échange d'énergie thermique se fait directement sans circuit ou composant intermédiaire. L'échange direct dans le condenseur ou l'évaporateur se fait directement entre le fluide frigorigène et par exemple un flux d'air.

Le système de production d'énergie électrique et d'énergie thermique comprend un dispositif à absorption.

Un dispositif d'absorption est une pompe à chaleur réversible à « compression » thermique utilisant des couples réfrigérant/sorbant présentant de fortes affinités afin de remplacer la compression de vapeur des machines traditionnelles. Cette solution présente de faibles consommations électriques, l'énergie principale étant issue de la source thermique, permettant de limiter le coût de fonctionnement dans le cas de la valorisation d'une source d'énergie à bas coût tel que le gaz par exemple ou gratuite (tel que l'énergie solaire ou le rejet de chaleur par exemple). De plus, les fluides frigorigènes utilisés dans les dispositifs à absorption ne présentent aucun impact environnemental : ni sur le réchauffement climatique (GWP pour Global warning potential = 0) ni sur la couche d'ozone (ODP pour Ozone depletion potential = 0).

Ce type de dispositif fonctionne grâce à la faculté de certains liquides d'absorber (réaction exothermique) et de désorber (réaction endothermique) une vapeur. Elles utilisent également le fait que la solubilité de cette vapeur dans le liquide dépend de la température et de la pression. Ainsi, ces dispositifs utilisent comme solution de travail un mélange binaire, dont l'un des composants est plus volatil que l'autre, et constitue le fluide frigorigène.

Un dispositif à absorption est donc composé de 4 échangeurs principaux (générateur 1, absorbeur 4, condenseur 2 et évaporateur 3), et avantageusement de un à trois échangeurs secondaires. Le rôle des trois échangeurs secondaires est d'améliorer les performances de la machine telles que : un rectifieur 13, un économiseur 8, un sous-refroidisseur 6. Selon une possibilité, le dispositif à absorption comprend au moins une vanne de détente 12, et au moins une boucle à solution 11 comprenant une pompe à solution 9 et une vanne de détente 10. Ce type de dispositif fonctionne selon trois niveaux de température : un niveau de température basse correspondant à la production de froid à l'évaporateur 3, un niveau de température intermédiaire correspondant à la température de condensation du fluide frigorigène, mais également à celle d'absorption du fluide frigorigène par l'absorbant et un niveau de température élevé correspondant à la température motrice du générateur 1.

La machine à absorption comprend un circuit fluidique à absorption 100 configuré pour assurer la connexion fluidique des différents composants de la machine à absorption. Le circuit fluidique à absorption 100 est un circuit fermé destiné à recevoir la solution de travail.

Un dispositif à absorption fonctionne pour une part à haute pression entre la pompe 9 en amont du générateur 1 et le détendeur 12, en aval du condenseur 102, et pour une autre part à basse pression entre le détendeur 12, en aval du condenseur 102 et la pompe 9 en amont du générateur 101.

Ce cycle thermodynamique est réalisable en raison de l'écart de pression de vapeur entre l'absorbant et le fluide frigorigène qui est variable en fonction de la température et de la pression. Cette variabilité permet d'avoir un écart de concentration entre la solution pauvre et la solution riche décrites ci-après. L'avantage de ce cycle à absorption est que la compression mécanique est remplacée par une compression thermochimique qui utilise de la chaleur, c'est-à-dire une source d'énergie primaire dégradée. Le seul apport d'énergie primaire nécessaire se situe au niveau de la pompe à solution, mais son travail est environ 96 fois inférieur au travail que le compresseur de vapeur doit fournir pour des conditions de fonctionnement similaires.

Selon l'invention, la centrale comprend une solution de travail fluide frigorigène/absorbant comprenant selon une possibilité le couple Ammoniac/Eau (NH3/H2O). Les concentrations du fluide de travail et de l'absorbant dans la solution de travail sont adaptées à la pression et la température du traitement d'air et inférieures à la concentration de cristallisation de la solution. Selon une autre possibilité, la solution de travail comprend des liquides ioniques.

Ce couple NH3/H2O est utilisable pour des applications de climatisation, mais aussi de réfrigération et il n'y a pas de cristallisation possible sur les plages de fonctionnement en pression et température. Par contre, pour ce couple, l'écart de pression de vapeur entre l'absorbant et le fluide frigorigène est faible. Il y a donc des traces d'eau emmenées avec la vapeur d'ammoniac en sortie du générateur 1 nécessitant parfois la présence d'un rectifieur 13.

La solution de travail est dite riche, car la concentration en fluide frigorigène est plus importante que dans la solution de travail dite pauvre.

Le système selon l'invention comprend :
Un générateur 1 configuré pour vaporiser le fluide frigorigène. Le générateur 1 est connecté fluidiquement à l'absorbeur 4 et au condenseur 2.Avantageusement, le générateur 1 est raccordé fluidiquement à l'absorbeur 4 par une connexion fluidique 100 et plus précisément avec l'économiseur 8 décrit ci-après permettant l'entrée de la solution de travail dite riche dans le générateur 1. Avantageusement, le générateur 1 est raccordé fluidiquement à l'absorbeur 4 par une connexion fluidique 101 et plus précisément avec l'économiseur 8 décrit ci-après permettant la sortie de la solution de travail dite pauvre hors du générateur 1. L'économiseur 8 étant lui-même avantageusement connecté fluidiquement par une connexion fluidique 102 à un détendeur 10 permettant de détendre la pression de la solution de travail dite pauvre avant qu'elle soit transmise à l'absorbeur 4 par une connexion fluidique 103. Avantageusement, le générateur 1 est raccordé fluidiquement au condenseur 2 par une connexion fluidique 104 permettant la sortie de la vapeur de fluide frigorigène hors du générateur 1. Avantageusement, le générateur 1 comprend également une entrée et une sortie de source chaude 14 permettant l'apport de chaleur nécessaire à la vaporisation du fluide frigorigène. Selon une possibilité de l'invention, la circulation de la source de chaleur ou source chaude 14 dans le générateur 1 est contrôlée par un circuit de stockage et de contrôle comprenant par exemple une pompe, une vanne trois voies assurant la recirculation de la source chaude 14 si sa température en sortie du générateur 1 est supérieure à une valeur seuil et un organe de stockage tel une cuve.

Avantageusement, le dispositif à absorption comprend un rectifieur 13 disposé entre le générateur 1 et le condenseur 2, plus précisément sur la connexion fluidique 104. Le rectifieur 13 permet d'enlever par condensation les traces d'eau entraînées avec le fluide du dispositif. Selon une possibilité, le rectifieur 13 comprend une source froide 19. Avantageusement, la source froide 19 est la solution de travail dite « riche » en sortie de la pompe 9 de la boucle de solution 11.

Le système selon l'invention comprend entre autres:

- Un condenseur 2 configuré pour condenser la vapeur de fluide frigorigène. Le condenseur 2 est connecté fluidiquement au générateur 1 et à l'évaporateur 3. Le condenseur 2 est raccordé fluidiquement au générateur 1 par une connexion fluidique 104 permettant l'entrée de la vapeur de fluide frigorigène dans le condenseur 2. Le condenseur 2 est raccordé fluidiquement à l'évaporateur 3 par une connexion fluidique 105, plus précisément avec un détendeur 12, permettant la sortie du fluide frigorigène à l'état liquide. Le condenseur 2 comprend également une source de refroidissement tel qu'une circulation d'air 16 pour assurer son fonctionnement normal. Le changement de phase du fluide frigorigène de l'état vapeur à l'état liquide s'accompagne d'une libération de chaleur qui est transmise par exemple au flux d'air circulant 16. L'air réchauffé est évacué du système.

Avantageusement, le système comprend un détendeur 12 agencé entre le condenseur 2 et l'évaporateur 3. Le détendeur 12 est configuré pour détendre le fluide frigorigène à l'état liquide issu du condenseur 2. Le détendeur 12 amène le fluide frigorigène à sa pression d'évaporation.

Avantageusement, le dispositif à absorption peut comprendre un sous-refroidisseur 6 agencé entre le condenseur 2 et l'évaporateur 3, et entre l'évaporateur 3 et l'absorbeur 4, plus précisément sur la connexion fluidique 105 et sur une connexion fluidique 107 en sortie de l'évaporateur. Le sous-refroidisseur 6 permet de sous-refroidir le fluide frigorigène en entrée de l'évaporateur 3 et de préchauffer le fluide frigorigène à l'état de vapeur en sortie de l'évaporateur 3. Cet échangeur permet donc de réduire la taille du condenseur 2 et de l'évaporateur 3 et ainsi d'améliorer de manière notable les performances de la machine. La pertinence de ce composant est fonction des températures de fonctionnement, la taille de la machine et le coût des échangeurs.

Le système selon l'invention comprend entre autres:

- Un évaporateur 3 configuré pour vaporiser le fluide frigorigène. L'évaporateur 3 est connecté fluidiquement au condenseur 2 et à l'absorbeur 4. L'évaporateur 3 est raccordé fluidiquement au condenseur 2, plus précisément à un détendeur 12, par une connexion fluidique 106. Le détendeur est avantageusement lui-même connecté fluidiquement en amont au sous-refroidisseur 6. La connexion fluidique 106 permet l'entrée du fluide frigorigène à l'état liquide dans l'évaporateur 3. L'évaporateur 3 est raccordé fluidiquement à l'absorbeur 4, plus précisément avantageusement avec le sous-refroidisseur 6, par une connexion fluidique 107, permettant la sortie de la vapeur de fluide frigorigène de l'évaporateur 3. L'évaporateur 3 comprend également une entrée et une sortie d'une source de chaleur 17. Le changement de phase du fluide frigorigène de l'état liquide à l'état vapeur s'accompagne d'une transmission de chaleur de la source chaude 17 au fluide frigorigène. La source chaude 17 transmet des calories et voit ainsi sa température s'abaisser. L'évaporateur 3 est le lieu de la production de frigories.

Le système selon l'invention comprend entre autres:

- Un absorbeur 4 configuré pour condenser la vapeur de fluide frigorigène issue de l'évaporateur 3. L'absorbeur 4 est connecté fluidiquement à l'évaporateur 3 et au générateur 1. L'absorbeur est raccordé fluidiquement à l'évaporateur 3, plus précisément du sous-refroidisseur 6, par une connexion fluidique 115 permettant l'entrée du fluide frigorigène à l'état de vapeur dans l'absorbeur 4. L'absorbeur 4 et le générateur 1 sont connectés fluidiquement par la boucle de solution 11.

L'absorbeur 4 est raccordé fluidiquement au générateur 1 par une connexion fluidique 108, plus précisément l'absorbeur 4 est raccordé fluidiquement avec une pompe 9 destinée à mettre en circulation la solution de travail dans le circuit de circulation fluidique, plus précisément une solution de travail dite riche sort de l'absorbeur 4 en direction du générateur 1 par la connexion fluidique 108. Avantageusement, la pompe 9 est connectée fluidiquement à un économiseur 8 au travers duquel la solution de travail dite riche est réchauffée avant d'être transmise au générateur 1. Avantageusement, l'économiseur 8 est un échangeur transmettant de la chaleur de la solution dite pauvre issue du générateur 1 vers la solution dite riche issue de l'absorbeur 4. L'absorbeur 4 est raccordé fluidiquement au générateur 1 par une connexion fluidique 103, plus précisément avec un détendeur 10. La connexion fluidique 103 permet l'entrée de la solution de travail dite pauvre issue du générateur 1 dans l'absorbeur 4. Le changement de phase du fluide frigorigène de l'état vapeur à l'état liquide s'accompagne d'une libération de chaleur qui est transmise à une source de refroidissement 18 tel qu'un flux d'air. L'air réchauffé est évacué du système.

Le système selon l'invention comprend entre autres :

- Un compresseur réversible 5 configuré pour fonctionner alternativement en compresseur actionné par un moteur ou en expanseur actionnant une génératrice. Les deux fonctions sont mises en oeuvres sur des périodes de temps définies et volontaires en fonction des besoins du système. Le compresseur réversible 5 est connecté fluidiquement au générateur 1 et à l'absorbeur 4. Le compresseur réversible 5 est raccordé fluidiquement au générateur 1 par une connexion fluidique 109 permettant l'entrée du fluide frigorigène à l'état de vapeur depuis le générateur 1 dans le compresseur réversible 5. Préférentiellement, un surchauffeur 7 est agencé sur la connexion fluidique 109 entre le générateur 1 et le compresseur réversible 5 pour permettre un échange thermique supplémentaire entre une source chaude 18 et le fluide de travail afin d'obtenir une vapeur de meilleure qualité à l'entrée du compresseur réversible 5 en mode expanseur. Le compresseur réversible 5 est raccordé fluidiquement à l'absorbeur 4 par une connexion fluidique 110 permettant la sortie du fluide frigorigène à l'état de vapeur détendue du compresseur réversible 5 vers l'absorbeur 4. Cette disposition du circuit fluidique correspond au mode de réalisation de production d'énergie électrique.

Selon une disposition du circuit fluidique générée par le module de gestion de la circulation de la solution de travail pour la production d'énergie thermique chaude, le compresseur réversible 5 est raccordé fluidiquement à l'absorbeur 4 avantageusement par une connexion fluidique 113 permettant l'entrée du fluide frigorigène à l'état de vapeur depuis l'absorbeur 4 dans le compresseur réversible 5.

Le compresseur réversible est raccordé fluidiquement au générateur 1 par une connexion fluidique 114 permettant la sortie du fluide frigorigène à l'état de vapeur comprimée du compresseur réversible 5 vers le générateur 1.

Selon une possibilité, le compresseur réversible de type turbomachine est un compresseur centrifuge turbine centripète ou compresseur axial -turbine axiale.

Selon une possibilité, le compresseur réversible 5 est relié mécaniquement à la pompe 9 de la boucle à solution de sorte à l'alimenter en énergie directement.

Le compresseur réversible 5 en mode compresseur est avantageusement alimenté en énergie par un moteur fournissant une puissance Wc. Dans ce mode, le compresseur réversible 5 a pour fonction de comprimer le fluide frigorigène le traversant de sorte à augmenter sa pression en entrée de l'absorbeur 4 ou du générateur 5.

Le compresseur réversible 5 en mode expanseur est avantageusement relié à une génératrice. Dans ce mode, le compresseur réversible 5 en mode expanseur a pour fonction de détendre le fluide frigorigène le traversant transformant l'énergie thermique en énergie mécanique. La génératrice permet de transformer l'énergie mécanique récupérée par l'expanseur en électricité en produisant une puissance électrique Wt.

Avantageusement, le compresseur réversible 5 de type turbomachine est configuré pour permettre une production électrique supérieure à 100kWe c'est-à-dire de moyenne puissance voir de grande puissance de 1MWe.

Le système selon l'invention comprend un module de gestion de la circulation de la solution de travail. Le module de gestion est configuré pour définir les conditions de fonctionnement du système en fonction des besoins en énergie et des fluctuations des sources. Notamment lorsque de l'énergie thermique est souhaitée : froid, chaleur, ou de l'énergie électrique, ou un mix d'énergie thermique : froid et d'énergie électrique, en fonction des températures des sources, du prix de l'électricité...

Le module de gestion comprend notamment des vannes de réglages et/ou au moins une vanne de détente avantageusement dont l'ouverture est réglable et/ou des moyens de réglages des débits de circulation de la solution de travail et du fluide frigorigène notamment par le contrôle de la vitesse de la pompe 9. Le système et le module de gestion selon l'invention présentent l'avantage d'être compactes en ne nécessitant avantageusement que peu de composants supplémentaires tels des vannes, éventuellement des capteurs de températures et de pression, ce qui réduit les coûts et l'encombrement permettant l'intégration du système selon l'invention dans le cadre d'application mobile.

Le système est configuré pour fonctionner dans au moins deux modes de fonctionnement.

Dans le premier mode de fonctionnement, le système produit soit de l'énergie thermique soit de l'énergie électrique. L'énergie thermique est considérée comme une production de froid ou une production de chaleur.

Une première condition est la demande de production de froid par la machine à absorption, la demande de production de froid peut être vérifiée par le module de gestion en fonction d'une commande binaire c'est-à-dire valeur de production de froid non nulle signifiant une demande de production de froid et une valeur de production de froid nulle signifiant une absence de demande de production de froid.

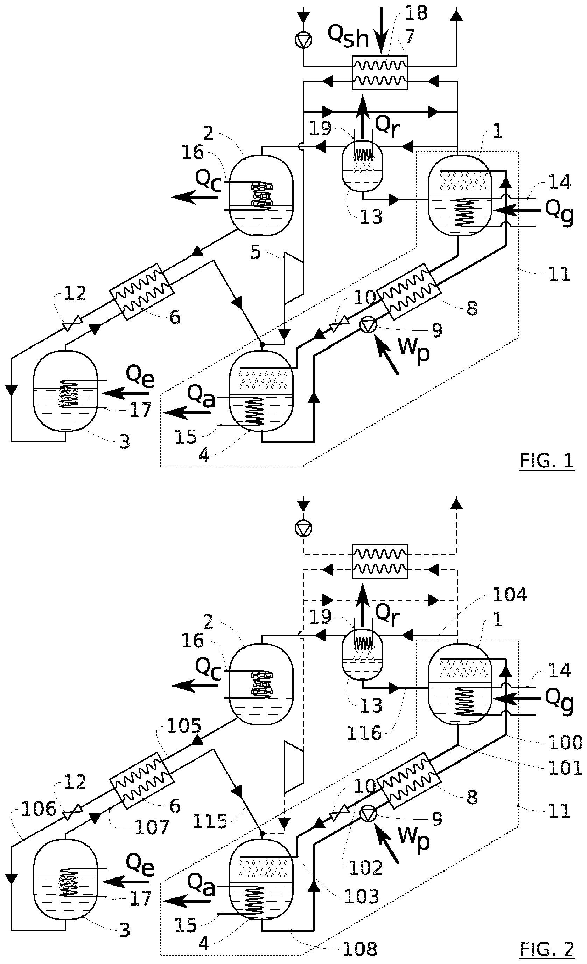

Dans le cas d'une demande de production de froid, le module de gestion de la circulation de la solution de travail va définir une circulation de la solution de travail suivant un cycle à absorption classique tel qu'illustré en figure 2. Cette fonction est dénommée fonction A. Selon l'invention, la production de froid se fait notamment à partir d'une source de chaleur basse température telle que la chaleur fatale, par exemple comprise entre 70°C et 150°C, pouvant être fluctuante, telle qu'une source solaire ou de chaleur fatale liée à la mise en route d'un moteur thermique ou de rejets industriels intermittents. Dans le cas, d'une source de chaleur fluctuante, avantageusement un stockage de calories en amont du système de production peut être prévu.

Le fonctionnement du système selon la figure 2 est décrit ci-après. Le fluide frigorigène de la solution de travail sort du générateur 1 par la connexion fluidique 104 traverse avantageusement un rectifieur 13 avant d'arriver dans le condenseur 2. Le fluide frigorigène ressort du condenseur 2 par la connexion fluidique 105 pour traverser avantageusement le sous-refroidisseur 6, et avantageusement un détendeur 12, avant d'arriver par la connexion fluidique 106 dans l'évaporateur 3. Le fluide frigorigène quitte l'évaporateur 3 par la connexion fluidique 107 pour avantageusement traverser le sous-refroidisseur 6 avant d'arriver dans l'absorbeur 4 par la connexion fluidique 115. Le fluide frigorigène est absorbé par l'absorbant et la solution de travail dite riche ressort de l'absorbeur par la connexion fluidique 108 pour circuler dans la boucle de solution 11 comprenant l'économiseur 8, la pompe 9 et le détendeur 10. La boucle de solution 11 est décrite ci-après : la solution de travail dite riche traversant avantageusement successivement une pompe 9 et un économiseur 8 avant d'arriver dans le générateur 1 par la connexion fluidique 100. La solution de travail dite pauvre ressort du générateur 1 par la connexion fluidique 101 pour traverser avantageusement successivement l'économiseur 8 et un détendeur 10 avant d'arriver dans l'absorbeur 4. La production de froid se fait au niveau de l'évaporateur 3 lors de l'évaporation du fluide frigorigène qui s'accompagne d'un refroidissement de la source chaude 17. La source chaude 17 refroidie peut ensuite être utilisée par exemple pour de la climatisation.

Une deuxième condition est la demande de production de chaleur par le système, la demande de production de chaleur peut être vérifiée par le module de gestion en fonction d'une commande binaire c'est-à-dire valeur de production de chaleur non nulle signifiant une demande de production de chaleur et une valeur de production de chaleur nulle signifiant une absence de demande de production de chaleur.

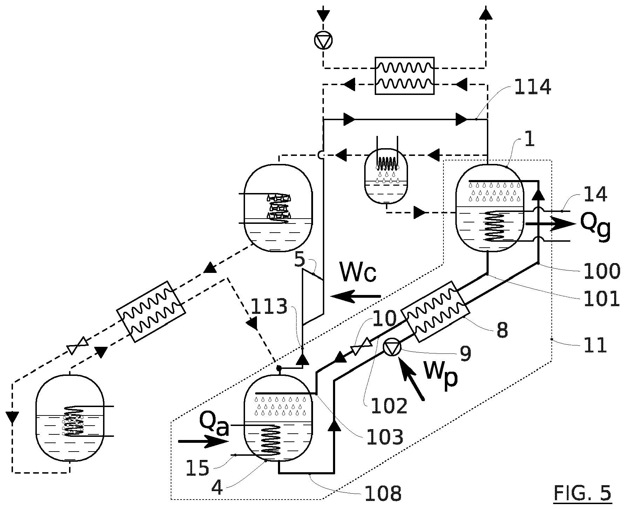

Dans le cas d'une demande de production de chaleur, avantageusement haute température par exemple comprise entre 70°C et 150°C, notamment à partir d'une source de chaleur à la température de l'environnement ambiant par exemple compris entre 10°C et 50°C pouvant être fluctuante, le module de gestion de la circulation de la solution de travail va définir une circulation de la solution de travail de type pompe à chaleur tel qu'illustré en figure 5. Cette fonction est dénommée fonction E.

Le fonctionnement du système selon la figure 5 est décrit ci-après. Dans ce mode de fonctionnement, le générateur 1 et l'absorbeur 4 tel que décrit ci-dessus inversent leur rôle, le générateur 1 fonctionne en mode absorbeur tandis que l'absorbeur 4 fonctionne en mode générateur.

Le fluide frigorigène sort de l'absorbeur 4, fonctionnant dans ce cas en mode générateur, par une connexion fluidique 113 débouchant dans le compresseur réversible 5 fonctionnant en mode compresseur actionné avantageusement par un moteur. Le fluide frigorigène ressort du compresseur réversible 5 par la connexion fluidique 114 débouchant dans le générateur 1, fonctionnant en mode absorbeur. Le fluide frigorigène est absorbé par l'absorbant et la solution de travail dite riche ressort du générateur 1, fonctionnant en mode absorbeur, pour traverser la boucle de solution 11 : la solution de travail dite riche traversant avantageusement successivement l'économiseur 8 et le détendeur 10 avant d'arriver dans l'absorbeur 4, fonctionnant en mode générateur, par la connexion fluidique 101. La solution de travail dite pauvre ressort de l'absorbeur 4, fonctionnant en mode générateur, par la connexion fluidique 100 pour traverser avantageusement successivement la pompe 9 et l'économiseur 8 avant d'arriver dans le générateur 1, fonctionnant en mode absorbeur 4. Dans ce mode de fonctionnement, la source de chaleur 14 au niveau du générateur 1, fonctionnant en absorbeur, récupère de l'énergie thermique produite lors de l'absorption du fluide frigorigène par l'absorbant. La source de chaleur 14 ressort réchauffée et pouvant être utilisée dans un circuit de chauffage d'habitation par exemple. A l'inverse, la source de refroidissement 15 au niveau de l'absorbeur 4, fonctionnant en mode générateur, est un apport de chaleur basse température. Pour chauffer la solution de travail. Le fluide frigorigène issu de l'absorbeur 4, fonctionnant en mode générateur, est ensuite comprimé par le compresseur 5 ce qui a pour effet de le surchauffer.

Selon une possibilité (non représentée), les connexions fluidiques 100, 101 et 114 au générateur 1 sont respectivement échangées avec les connexions 103, 108 et 113 à l'absorbeur 4 permettant ainsi de s'affranchir des caractères réversibles du générateur 1 en fonctionnement absorbeur et de l'absorbeur 4 en fonctionnement générateur pour la production de chaleur décrite en référence à la figure 5. Dans cette possibilité, les fonctions des sources thermiques 14 et 15 sont également échangées. Suivant cette possibilité, des connexions fluidiques et des vannes complémentaires sont ajoutées et sont commandées par le module de gestion.

Une troisième condition est la demande de production d'électricité par le système, la demande de production d'électricité peut être vérifiée par le module de gestion en fonction d'une commande binaire c'est-à-dire valeur de production d'électricité non nulle signifiant une demande de production d'électricité et une valeur de production d'électricité nulle signifiant une absence de demande de production d'électricité.

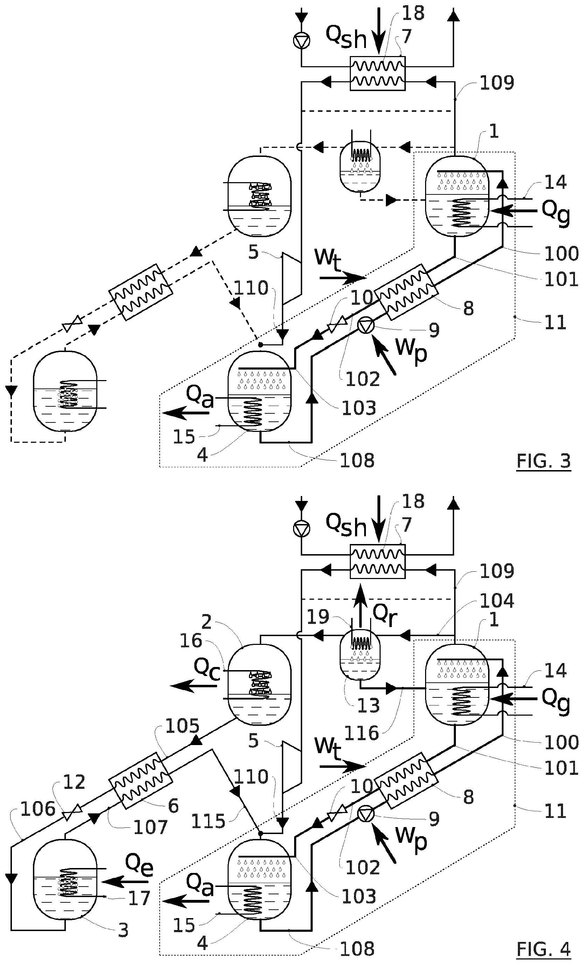

Dans le cas d'une demande de production d'électricité, notamment à partir d'une source de chaleur basse température telle que la chaleur fatale par exemple comprise entre 70°C et 150°C pouvant être fluctuante, le module de gestion de la circulation de la solution de travail va définir une circulation de la solution de travail tel qu'illustrée en figure 3. Le cycle de circulation de la solution de travail s'apparente à un cycle de Rankine, plus spécifiquement à un cycle de Kalina.

Le fonctionnement du système selon la figure 3 est décrit ci-après. Cette fonction est dénommée fonction B. Le fluide frigorigène de la solution de travail sort du générateur 1 par la connexion fluidique 109 et traverse avantageusement un surchauffeur 7 avant d'arriver dans le compresseur réversible 5. Le fluide frigorigène ressort du compresseur réversible 5 par la connexion fluidique 110 débouchant dans l'absorbeur 4. Le fluide frigorigène est absorbé par l'absorbant et la solution de travail dite riche ressort de l'absorbeur 4 pour traverser la boucle de solution 11 telle que décrite en référence à la figure 2 avant de retourner au niveau de générateur 1. L'électricité est produite par le compresseur réversible en mode expanseur relié à une génératrice électrique.

Dans le deuxième mode de fonctionnement, le système produit simultanément de l'énergie thermique et de l'énergie électrique. Dans ce mode de fonctionnement, l'énergie thermique produite est du froid.

Dans le cas d'une demande de production concomitante d'électricité et de froid, notamment d'une source de chaleur basse température telle que la chaleur fatale par exemple comprise entre 70°C et 150°C pouvant être fluctuante, le module de gestion de la circulation de la solution de travail va définir une circulation de la solution de travail suivant un cycle à absorption et un cycle de production d'électricité tel qu'illustré en figure 4. Les deux fonctions décrites ci-dessus en référence aux figures 2 et 3 sont combinées dans ce mode de fonctionnement. Cette fonction est dénommée fonction C. Le système selon l'invention est configuré pour assurer un fonctionnement en parallèle de la production d'électricité et de la production de froid ce qui permet de moduler en fonction des besoins la proportion d'électricité produite et de froid produit.

Le fonctionnement du système selon la figure 4 est décrit ci-après.

A la sortie du générateur 1, le fluide frigorigène de la solution de travail est orienté partiellement vers un cycle de production de froid et partiellement vers un cycle de production d'électricité. Le compresseur réversible 5 est agencé entre le générateur 1 et l'absorbeur 4 en parallèle du condenseur 2 et de l'évaporateur 3. Une partie du fluide frigorigène en sortie du générateur est dérivé vers le compresseur réversible 5 tandis que l'autre partie circule vers le condenseur 2.

Le fluide frigorigène passant par la connexion fluidique 104 traverse avantageusement un rectifieur 13 avant d'arriver dans le condenseur 2. Le fluide frigorigène ressort du condenseur 2 par la connexion fluidique 105 pour traverser avantageusement le sous-refroidisseur 6 et avantageusement un détendeur 12 avant d'arriver par la connexion fluidique 106 dans l'évaporateur 3. Le fluide frigorigène quitte l'évaporateur par la connexion fluidique 107 pour avantageusement traverser le sous-refroidisseur 6 avant d'arriver dans l'absorbeur 4 par la connexion fluidique 115. Le fluide frigorigène est absorbé par l'absorbant et la solution de travail dite riche ressort de l'absorbeur par la connexion fluidique 108 pour circuler dans la boucle de solution 11 comprenant l'économiseur 8, la pompe 9 et le détendeur 10. La boucle de solution 11 est décrite ci-après, la solution de travail dite riche traversant avantageusement successivement une pompe 9 et un économiseur 8 avant d'arriver dans le générateur 1 par la connexion fluidique 100. La solution de travail dite pauvre ressort du générateur 1 par la connexion fluidique 101 pour traverser avantageusement successivement l'économiseur 8 et un détendeur 10 avant d'arriver dans l'absorbeur 4.

Le fluide frigorigène passant par la connexion fluidique 109 traverse avantageusement un surchauffeur 7 avant d'arriver au compresseur réversible 5 fonctionnant en mode compresseur. Le fluide frigorigène ressort du compresseur 5 comprimé par la connexion fluidique 110 débouchant dans l'absorbeur 4. Au niveau de l'absorbeur le fluide frigorigène en provenance du compresseur 5 et le fluide frigorigène en provenance de l'évaporateur 3 sont réunis pour traverser la boucle de solution 11. Le fluide frigorigène est absorbé par l'absorbant et la solution de travail dite riche ressort de l'absorbeur par la connexion fluidique 108 pour circuler dans la boucle de solution 11 comprenant l'économiseur 8, la pompe 9 et le détendeur 10 telle que décrite en ci-dessus.

Selon une possibilité (non représentée), le fluide frigorigène est orienté en sortie du générateur 1 vers le rectifieur 13 avant d'être divisé en deux flux respectivement vers le condenseur 2 par une portion de la connexion fluidique 104 et vers le compresseur réversible 5, avantageusement en passant préalablement par le surchauffeur 7, par une portion de la connexion fluidique 109. La production de froid se fait au niveau de l'évaporateur 3 lors de l'évaporation du fluide frigorigène qui s'accompagne d'un refroidissement de la source chaude 17. La source chaude 17 refroidie peut ensuite être utilisée par exemple pour de la climatisation. L'électricité est produite par le compresseur réversible 5 en mode expanseur relié à une génératrice électrique.

Selon un mode de réalisation, le système comprend au moins un module de stockage de frigories associé à l'évaporateur 3. Le stockage de frigories permet ainsi un stockage d'énergie lorsque la source et le besoin ne sont pas concomitants. Les frigories stockées peuvent être déstockées sous forme de froid ou bien sous forme d'électricité en fonction des besoins. Le module de stockage de frigories peut être un système de stockage thermique par Matériau à Changement de Phase ou bien directement un stockage de fluide froid. Le module de stockage de frigories est associé à l'évaporateur 3 pour stocker des frigories lors du fonctionnement pour la production de froid. Avantageusement, le module de stockage de frigories est également associé à l'absorbeur 4 pour déstocker des frigories vers l'absorbeur 4 lorsqu'une source de refroidissement 15 est souhaitée, c'est-à-dire notamment dans les différents modes de fonctionnement à l'exception de la production de chaleur.

Selon un mode de réalisation, le système comprend au moins un module de stockage d'électricité associé à au compresseur réversible 5 et plus spécifiquement à la génératrice électrique associée au compresseur réversible 5. Le stockage d'électricité permet ainsi un stockage d'énergie lorsque la source et le besoin ne sont pas concomitants. L'électricité stockée peut être déstockée sous forme de froid ou bien sous forme d'électricité en fonction des besoins. À titre d'exemple des batteries électriques sont prévues.

Selon un mode de réalisation, le système comprend au moins un module de stockage de chaleur associé au générateur 1 en mode absorbeur ou à l'absorbeur selon le mode de réalisation non représenté décrit ci-dessus. Le stockage de chaleur permet ainsi un stockage d'énergie lorsque la source et le besoin ne sont pas concomitants. Les calories stockées peuvent être déstockées sous forme de chaleur ou bien sous forme d'électricité en fonction des besoins. Le module de stockage de calories peut être un système de stockage thermique par Matériau à Changement de Phase ou bien directement un stockage de fluide chaud. Le module de stockage de calories est associé au générateur 1 en mode absorbeur pour stocker des calories lors du fonctionnement pour la production de chaleur. Avantageusement, le module de stockage de calories est également associé à l'absorbeur 4 en mode générateur pour déstocker des calories lorsqu'une source de chaleur 14 est souhaitée au niveau du générateur 1.

Exemple 1

Un exemple de configuration détaillée est fourni ci-après avec pour chaque composant du système, la configuration type :

- Générateur 1-Température source chaude : 110°C
- Rectifieur 13-Taux de rectification : 0,5
- Surchauffeur 7-Température à l'entrée de l'expanseur (fonctions B et C) : 130°C
- Condenseur 2-Température source intermédiaire : 27°C
- Evaporateur 3-Surchauffe : 5°C - Température source froide (figures 2 et 4) : 18°C - Température source froide (figure 5) : variable
- Absorbeur 4-Température source intermédiaire : 27°C
- Pompe 9-Débit 100 kg/h, Rendement : 80 %
- Compresseur 5/Expanseur-Rendement : 50 %

Pour la production de froid (fonctions A et C) le COP est défini par l'équation (1).

$$COP = \frac{Q_{froid}}{Q_{chaud} + W_{pompe}} \quad (1)$$

$Q_{chaud}$ étant la puissance Qg délivrée par la source thermique, en particulier par la source de chaleur 14 au niveau du générateur 1, sous forme de chaleur et Wpompe la puissance électrique consommée par la pompe 9.

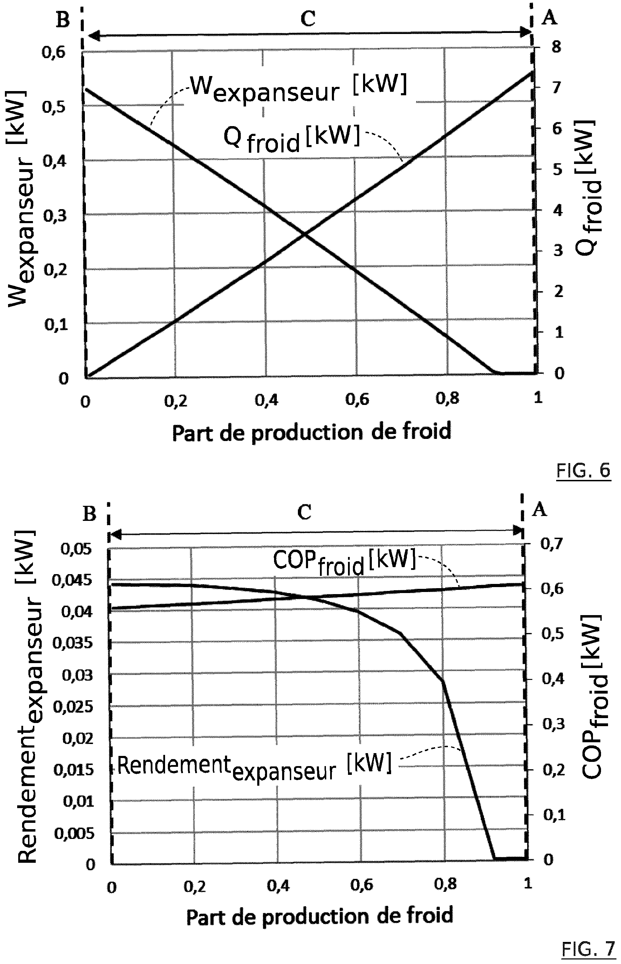

Les figures 6 et 7 illustrent les performances qu'il est possible d'atteindre avec cette configuration type pour les modes de fonctionnement illustrés au figures 2 à 4, fonction A, B, C.

Pour la production de froid basse température, illustré à la figure 5, le COP est défini par l'équation (2).

$$COP = \frac{Q_{chaud}}{W_{compresseur} + W_{pompe}} \quad (2)$$

$W_{compresseur}$ étant la puissance électrique Wc consommée par le compresseur.

L'utilisation du compresseur (fonctionnement de la figure 4) permet la production de froid à plus faible température (ici, -8°C et -21 °C) ainsi que pour toutes les températures d'augmenter la production de froid sans dégradation du COP.

Exemple 2

Dans le mode de fonctionnement de la figure 5, l'absorbeur et le générateur échangent leurs rôles par rapport aux modes de fonctionnement des figures 2 à 4 et le compresseur réversible 5 fonctionne en mode compresseur.

Le tableau suivant synthétise un point de fonctionnement pour le mode de fonctionnement de la figure 5. A noter que les températures des sources restent inchangées par rapport aux modes de fonctionnement des figures 2 à 4.

| | |
|---|---|
| Pompe 9 | Débit : 100 kg/h, Rendement : 80 % |
| Absorbeur 2 | Température source chaude : 1 10°C, Pression : 3-17 bar |
| Générateur 1 | Température source froide : 27°C, Pression : 1 bar |
| Compresseur 5 | Rendement : 50 % |

Pour la production de chaud (fonctionnement de la figure 5), le COP est défini par l'équation (2) ci-dessus.

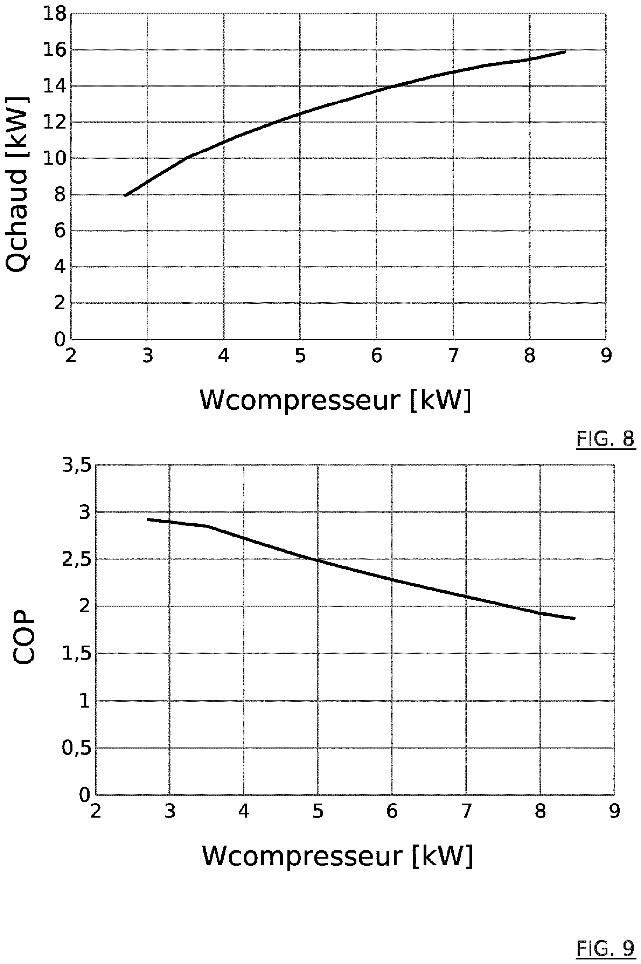

Les figures 8 et 9 illustrent les performances qu'il est possible d'atteindre avec cette configuration type pour le mode de fonctionnement de la figure 5, fonction E.

L'invention n'est pas limitée aux modes de réalisations précédemment décrits et s'étend à tous les modes de réalisation couverts par les revendications.

**REFERENCES**

| | |
|---|---|
| 1 | Générateur |
| 2 | Condenseur |
| 3 | Evaporateur |
| 4 | Absorbeur |
| 5 | Compresseur réversible |
| 6 | Sous-refroidisseur |
| 7 | Surchauffeur |
| 8 | Economiseur |
| 9 | Pompe à solution |
| 10 | Détendeur |
| 11 | Boucle de solution |
| 12 | Détendeur |
| 13 | Rectifieur |
| 14 | Source chaude |

| 15 | Source de refroidissement |
|---|---|
| 16 | Flux d'air |
| 17 | Source chaude |
| 18 | Source froide |
| 19 | Source froide |
| 100 | Connexion fluidique entre l'économiseur et le générateur |
| 101 | Connexion fluidique entre le générateur et l'économiseur |
| 102 | Connexion fluidique entre l'économiseur et le détendeur |
| 103 | Connexion fluidique entre le détendeur et l'absorbeur |
| 104 | Connexion fluidique entre le générateur et le condenseur |
| 105 | Connexion fluidique entre le condenseur et le sous-refroidisseur |
| 106 | Connexion fluidique entre le sous-refroidisseur et l'évaporateur |
| 107 | Connexion fluidique entre l'évaporateur et le sous-refroidisseur |
| 108 | Connexion fluidique entre l'absorbeur et l'économiseur |
| 109 | Connexion fluidique entre le générateur et le compresseur réversible en mode expanseur |
| 110 | Connexion fluidique entre le compresseur réversible et l'absorbeur |
| 113 | Connexion fluidique entre le compresseur réversible en mode compresseur et l'absorbeur en mode générateur |
| 114 | Connexion fluidique entre le compresseur réversible en mode compresseur et le générateur en mode absorbeur |
| 115 | Connexion fluidique entre le sous-refroidisseur et l'absorbeur |
| 116 | Connexion fluidique entre le rectifieur et le générateur |

| Qg | Puissance générateur |
|---|---|
| Qc | Puissance condenseur |
| Qe | Puissance évaporateur |
| Qa | Puissance absorbeur |
| Qr | Puissance rectifieur |
| Qsh | Puissance surchauffeur |
| Wc | Travail compresseur |
| Wt | Travail détendeur |

**Revendications**

1. Système de production d'énergie thermique et d'énergie électrique comprenant un dispositif à absorption comprenant un absorbeur (4), un générateur (1), un condenseur (2), un évaporateur (3) et un circuit fluidique d'absorption (100) apte à recevoir une solution de travail comprenant un fluide frigorigène et un absorbant, le circuit fluidique (100) reliant le générateur (1) au condenseur (2), le condenseur (2) à l'évaporateur (3), l'évaporateur (3) à l'absorbeur (4) et l'absorbeur (4) au générateur (1)

   où le système comprend également :

   - Un compresseur réversible (5) agencé sur le circuit fluidique (100) entre le générateur (1) et l'absorbeur (4) en dérivation du condenseur (2) et de l'évaporateur (3) et configuré pour fonctionner alternativement en mode compresseur actionné par un moteur ou en mode expanseur actionnant une génératrice configurée pour produire de l'électricité, le compresseur réversible (5) étant une turbomachine
   - Un module de gestion de la circulation de la solution de travail dans le circuit fluidique de sorte à assurer dans un premier mode de fonctionnement une production d'énergie électrique alternativement avec une production de froid, ou de chaleur, le compresseur réversible (5) fonctionnant en mode compresseur et dans un deuxième mode de fonctionnement pour assurer la production d'énergie électrique simultanément à la production de froid, le compresseur réversible (5) fonctionnant en mode expanseur.

2. Système selon la revendication précédente dans lequel la solution de travail comprend comme fluide réfrigérant de l'ammoniac (NH$_3$) et comme absorbant de l'eau (H$_2$O).

3. Système selon l'une quelconque des revendications précédentes dans lequel le compresseur réversible (5) est un compresseur centrifuge - turbine centripète ou compresseur axial -turbine axiale.

4. Système selon l'une quelconque des revendications précédentes comprenant au moins un module de stockage de frigories associé à l'évaporateur (3).

**5.** Système selon l'une quelconque des revendications précédentes comprenant au moins un module de stockage de calories associé à l'absorbeur (4).

**6.** Système selon l'une quelconque des revendications précédentes comprenant au moins un module de stockage d'électricité associé au compresseur réversible (5).

**7.** Procédé de production d'énergie électrique et d'énergie thermique par un système selon l'une quelconque des revendications précédentes
où il comprend

- dans le premier mode de fonctionnement alternativement :

◦ une production d'énergie thermique, froide ou chaude dans ce cas, par la circulation de la solution de travail dans le circuit fluidique (100) successivement au travers de l'absorbeur (4) fonctionnant en mode générateur, du compresseur réversible (5) en mode compresseur et du générateur (1) fonctionnant en mode absorbeur, puis à nouveau dans l'absorbeur (4), ou
◦ une production d'énergie électrique qui se fait par une circulation de la solution de travail dans le circuit fluidique (100) successivement au travers du générateur (1), du compresseur réversible (5) en mode expanseur associé à une génératrice électrique, de l'absorbeur (4) puis à nouveau dans le générateur (1), ou

- dans le deuxième mode de fonctionnement simultanément :

◦ La production d'énergie thermique froide, qui se fait par la circulation de la solution de travail dans le circuit fluidique (100) successivement au travers du générateur (1), du condenseur (2), de l'évaporateur (3), de l'absorbeur (4) puis à nouveau dans le générateur (1), et
◦ La production d'énergie électrique qui se fait par la circulation de la solution de travail dans le circuit fluidique (100) successivement au travers du générateur (1), du compresseur réversible (5) en mode expanseur associé à une génératrice électrique, de l'absorbeur (4) puis à nouveau dans le générateur (1).

**8.** Procédé selon la revendication 7 dans lequel la température de l'énergie thermique froide produite est compris entre -10°C et -25°C ou -10°C et 20°C

**9.** Procédé selon l'une quelconque des revendications 7 à 8 comprenant une source de chaleur comprenant de la chaleur basse température avantageusement comprise entre 70°C et 150°C.

**10.** Utilisation d'un système de production d'énergie thermique et d'énergie électrique selon l'une quelconque des revendications 1 à 6 pour une production électrique d'une puissance supérieure à 100 kWe.

**Patentansprüche**

**1.** System zum Erzeugen thermischer und elektrischer Energie, das eine Absorptionsvorrichtung umfasst, die einen Absorber (4), einen Generator (1), einen Kondensator (2), einen Verdampfer (3) und einen Absorptionsfluidkreislauf (100) umfasst, der dazu ausgelegt ist, eine Arbeitslösung aufzunehmen, die ein Kühlmittel und ein Absorptionsmittel umfasst, wobei der Fluidkreislauf (100) den Generator (1) mit dem Kondensator (2), den Kondensator (2) mit dem Verdampfer (3), den Verdampfer (3) mit dem Absorber (4) und den Absorber (4) mit dem Generator (1) verbindet, wobei das System außerdem Folgendes umfasst:

- einen reversiblen Kompressor (5), der im Fluidkreislauf (100) zwischen dem Generator (1) und dem Absorber (4) unter Umgehung des Kondensators (2) und des Verdampfers (3) angeordnet und dazu konfiguriert ist, abwechselnd im von einem Motor betriebenen Kompressormodus oder im Expansionsmodus, der einen Stromerzeuger betreibt, der dazu konfiguriert ist, Strom zu erzeugen, zu arbeiten, wobei der reversible Kompressor (5) eine Turbomaschine ist,
- ein Steuermodul für die Zirkulation der Arbeitslösung im Fluidkreislauf in einem ersten Betriebsmodus, um eine Erzeugung von elektrischer Energie abwechselnd mit einer Erzeugung von Kälte oder Wärme sicherzustellen, wobei der reversible Kompressor (5) im Kompressormodus arbeitet, und in einem zweiten Betriebsmodus, um die Erzeugung von elektrischer Energie gleichzeitig bei der Erzeugung von Kälte sicherzustellen, wobei der reversible Kompressor (5) im Expansionsmodus arbeitet.

2. System nach dem vorhergehenden Anspruch, wobei die Arbeitslösung Ammoniak (NH$_3$) als Kühlfluid und Wasser (H$_2$O) als Absorptionsmittel umfasst.

3. System nach einem der vorhergehenden Ansprüche, wobei der reversible Kompressor (5) ein Zentrifugalkompressor-Zentripetalturbine oder ein Axialkompressor-Axialturbine ist.

4. System nach einem der vorhergehenden Ansprüche, das mindestens ein Kältespeichermodul umfasst, das dem Verdampfer (3) verbunden ist.

5. System nach einem der vorhergehenden Ansprüche, das mindestens ein Kalorienspeichermodul umfasst, das mit dem Absorber (4) verbunden ist.

6. System nach einem der vorhergehenden Ansprüche, das mindestens ein Stromspeichermodul umfasst, das dem reversiblen Kompressor (5) verbunden ist.

7. Verfahren zum Erzeugen von elektrischer Energie und thermischer Energie durch ein System nach einem der vorhergehenden Ansprüche,
wobei es Folgendes umfasst

    - im ersten Betriebsmodus abwechselnd:

        ◦ eine Erzeugung thermischer Energie, in diesem Fall kalt oder heiß, durch die Zirkulation der Arbeitslösung im Fluidkreislauf (100) nacheinander durch den im Generatormodus arbeitenden Absorber (4), den im Kompressormodus arbeitenden reversiblen Kompressor (5) und den im Absorbermodus arbeitenden Generator (1), dann wieder durch den Absorber (4), oder
        ◦ eine Erzeugung elektrischer Energie, die durch die Zirkulation der Arbeitslösung im Fluidkreislauf (100) nacheinander durch den Generator (1), den reversiblen Kompressor (5) im Expansionsmodus, der mit einem Stromerzeuger verbunden ist, den Absorber (4) und dann wieder durch den Generator (1) erfolgt, oder

    - im zweiten Betriebsmodus gleichzeitig:

        ◦ die Erzeugung kalter thermischer Energie, die durch die Zirkulation der Arbeitslösung im Fluidkreislauf (100) nacheinander durch den Generator (1), den Kondensator (2), den Verdampfer (3), den Absorber (4) und dann wieder durch den Generator (1) erfolgt, und
        ◦ die Erzeugung elektrischer Energie, die durch die Zirkulation der Arbeitslösung im Fluidkreislauf (100) nacheinander durch den Generator (1), den reversiblen Kompressor (5) im Expansionsmodus, der mit einem Stromerzeuger verbunden ist, den Absorber (4) und dann wieder durch den Generator (1) erfolgt.

8. Verfahren nach Anspruch 7, wobei die Temperatur der erzeugten kalten thermischer Energie zwischen -10 °C und -25 °C oder -10 °C und 20 °C liegt.

9. Verfahren nach einem der Ansprüche 7 bis 8, das eine Wärmequelle mit Niedertemperaturwärme, vorteilhafterweise zwischen 70 °C und 150 °C, umfasst.

10. Verwendung eines Systems zum Erzeugen thermischer und elektrischer Energie nach einem der Ansprüche 1 bis 6 zur Stromerzeugung mit einer Leistung größer 100 kWe.

**Claims**

1. A thermal energy and electrical energy production system comprising an absorption device comprising an absorber (4), a generator (1), a condenser (2), an evaporator (3) and an absorption fluid circuit (100) capable of receiving a working solution comprising a refrigerant and an absorbent, the fluid circuit (100) connecting the generator (1) to the condenser (2), the condenser (2) to the evaporator (3), the evaporator (3) to the absorber (4) and the absorber (4) to the generator (1) where the system also comprises:

    - A reversible compressor (5) arranged on the fluid circuit (100) between the generator (1) and the absorber (4) bypassing the condenser (2) and the evaporator (3) and configured to operate alternately in compressor mode operated by a motor or in expander mode operating a generator configured to produce electricity, the reversible compressor (5) being a turbomachine
- A module for managing the circulation of the working solution in the fluid circuit so as to ensure in a first operating mode a production of electrical energy alternately with a production of cold, or heat, the reversible compressor (5) operating in compressor mode and in a second operating mode to ensure the production of electrical energy simultaneously with the production of cold, the reversible compressor (5) operating in expander mode.

2. The system according to the preceding claim wherein the working solution comprises ammonia ($NH_3$) as refrigerant fluid and water ($H_2O$) as absorbent.

3. The system according to any one of the preceding claims wherein the reversible compressor (5) is a centrifugal compressor - centripetal turbine or axial compressor - axial turbine.

4. The system according to any one of the preceding claims comprising at least one cold storage module associated with the evaporator (3).

5. The system according to any one of the preceding claims comprising at least one calorie storage module associated with the absorber (4).

6. The system according to any one of the preceding claims comprising at least one electricity storage module associated with the reversible compressor (5).

7. A method for producing electrical energy and thermal energy by a system according to any one of the preceding claims where it comprises

    - in the first operating mode alternately:

        ◦ a production of thermal energy, cold or hot in this case, by the circulation of the working solution in the fluid circuit (100) successively through the absorber (4) operating in generator mode, the reversible compressor (5) in compressor mode and the generator (1) operating in absorber mode, then again in the absorber (4), or
        ◦ a production of electrical energy which is carried out by circulation of the working solution in the fluid circuit (100) successively through the generator (1), the reversible compressor (5) in expander mode associated with an electric generator, the absorber (4) then again in the generator (1), or

    - in the second operating mode simultaneously:

        ◦ The production of cold thermal energy, which is done by the circulation of the working solution in the fluid circuit (100) successively through the generator (1), the condenser (2), the evaporator (3), from the absorber (4) then again in the generator (1), and
        ◦ The production of electrical energy which is done by the circulation of the working solution in the fluid circuit (100) successively through the generator (1), the reversible compressor (5) in expander mode associated with an electric generator, the absorber (4) then again in the generator (1).

8. The method according to claim 7 wherein the temperature of the cold thermal energy produced is comprised between -10°C and -25°C or -10°C and 20°C.

9. The method according to any one of claims 7 to 8 comprising a heat source comprising low temperature heat advantageously comprised between 70°C and 150°C.

10. A use of a thermal energy and electrical energy production system according to any one of claims 1 to 6 for electrical production with a power greater than 100 kWe.

FIG. 1

FIG. 2

FIG. 3

FIG. 4

$W_c$

$Q_g$

$W_p$

$Q_a$

FIG. 5

FIG. 6

FIG. 7

FIG. 8

FIG. 9

## RÉFÉRENCES CITÉES DANS LA DESCRIPTION

**Documents brevets cités dans la description**

- AT 511823 A4
- US 2005086971 A
- DE 102006060836

**Littérature non-brevet citée dans la description**

- **GOKMEN DEMIRKAYA ; RICARDO VASQUEZ PADILLA ; ARMANDO FONTALVO ; YEE YAN LIM.** Thermal and Exergetic Analysis of the Goswami Cycle Integrated with Mid-Grade Heat Sources. *Entropy,* Août 2017, vol. 19 (8), 416

- **WU et al.** A novel internally hybrid absorption-compression heat pump for performance improvement. *Energy Conversion and Management,* 15 Juillet 2018, vol. 168, 237-251